# FASCICULE DE BREVET EUROPEEN

(11) **EP 0 581 632 B1**
(45) Date de publication et mention de la délivrance du brevet: **25.09.1996**
(21) Numéro de dépôt: 93401780.7
(22) Date de dépôt: 08.07.1993
(51) Int. Cl.: B60K 15/04

(54) **Pipe de remplissage de réservoir de carburant**
Einfüllstutzen für Benzintank
Filler pipe for fuel tank

(30) Priorité: 27.07.1992 FR 9209248
(43) Date de publication de la demande: 02.02.1994
(73) Titulaire: REGIE NATIONALE DES USINES RENAULT S.A., F-92109 Boulogne Billancourt (FR)
(72) Inventeur: Marie, Gilles, F-78210 St-Cyr-l'Ecole (FR)

(56) Documents cités:
- EP-A- 0 223 931
- DE-A- 3 641 274
- FR-A- 2 293 652
- GB-A- 1 093 976
- US-A- 4 131 141

## Description

La présente invention concerne d'une manière générale une pipe de remplissage de réservoir de carburant, par exemple de véhicule automobile. Plus particulièrement la présente invention concerne une pipe de remplissage de réservoir de carburant comportant un clapet étanche évitant le relâchement dans l'atmosphère de la majeure partie des vapeurs de carburant lors du remplissage du réservoir.

Les problèmes de pollution de l'environnement, et en particulier de l'atmosphère, font l'objet d'un intérêt croissant de la part des pouvoirs publics ainsi que des industriels. L'exigence de niveaux de plus en plus élevés de dépollution des véhicules automobiles fait qu'il est souhaitable d'éliminer toutes les sources de pollution d'un véhicule automobile, même les plus minimes.

Lors d'un remplissage du réservoir de carburant d'un véhicule automobile dans une station service, le conducteur ou le pompiste enlève le bouchon fermant la pipe de remplissage du réservoir et introduit le bec du pistolet de la pompe dans cette pipe et rempli le réservoir. Une fois le réservoir rempli, il retire le bec du pistolet et remet le bouchon en place. Jusqu'à présent, dans ces trois phases, enlèvement du bouchon, remplissage du réservoir et remise du bouchon, le réservoir du véhicule reste en communication avec l'atmosphère et les vapeur de carburant sortant du réservoir se dégagent dans l'atmosphère.

Toutes les solutions envisagées à l'heure actuelle pour réduire le taux de vapeurs relâchées dans l'atmosphère consiste à réaspirer ces vapeurs au moyen de pistolets de remplissage de réservoir munis d'un système d'aspiration, donc pendant la phase de remplissage. Avant et après cette phase de remplissage, c'est-à-dire, entre le moment où l'on enlève le bouchon et avant l'introduction du bec de pistolet de remplissage et entre le moment où l'on retire le pistolet de remplissage et avant la remise en place en place du bouchon, il n'est rien prévu.

Le brevet GB-A- 1 541 921 décrit une pipe de remplissage de réservoir de carburant comportant une soupape déchargeant les vapeurs de carburant dans l'atmosphère lorsque la pression dans le réservoir est supérieure à la pression extérieure. Cette soupape qui est est disposée à proximité de l'embouchure de la pipe de remplissage n'assure absolument pas une fermeture étanche du corps de la pipe de remplissage vis-à-vis de l'atmosphère et les vapeurs de carburant contenues dans le réservoir et la pipe de remplissage peuvent s'échapper librement dans l'atmosphère lors de l'enlèvement et du replacement du bouchon sur l'embouchure de la pipe de remplissage.

Le brevet EP-A- 0 223 931 décrit une pipe de remplissage pour un réservoir de carburant comportant un système de désaérage actif pendant le ravitaillement. La pipe de remplissage comporte également un clapet d'étanchéité formant une chambre annulaire. Il est prévu sur une paroi intérieure de la garniture formant la chambre plusieurs ouvertures permettant l'écoulement des vapeurs. Le système de désaérage débouche dans la chambre au niveau de la paroi comportant les ouvertures. Par conséquent, le réservoir, par l'intermédiaire du système de désaérage et des ouvertures dans la paroi de la garniture communique librement avec l'atmosphère lors de l'enlèvement et de la remise en place du bouchon. Les vapeurs de carburant qui y résident, ainsi que celles contenues dans le système de désaérage, peuvent donc librement s'échapper dans l'atmosphère pendant ses deux phases et contribuer à l'accroissement de la pollution atmosphérique.

La présente invention se propose donc d'éliminer la majeure partie des vapeurs de carburant pendant les phases pré- et post remplissage, sans surcoût par rapport aux solutions déjà prévues pour éliminer les vapeurs pendant la phase de remplissage.

Selon la présente invention on réalise une pipe de remplissage de réservoir de carburant, par exemple d'un véhicule automobile, comprenant un corps tubulaire ayant une paroi interne, une paroi externe, une première extrémité ouverte communiquant avec le réservoir de carburant et une seconde extrémité ouverte communiquant avec l'atmosphère et fermée de façon étanche par un bouchon amovible, un conduit anti-refoulement relié par une première extrémité ouverte au réservoir de carburant et par une seconde extrémité ouverte au corps tubulaire de la pipe de remplissage à proximité de la seconde extrémité ouverte du corps tubulaire de la pipe et un clapet étanche situé à l'intérieur du corps tubulaire de la pipe de remplissage en aval du bouchon, le clapet comprenant un corps tronconique creux ayant une paroi interne, une paroi externe, une extrémité ouverte amont et une extrémité ouverte avale, la section du corps tronconique diminuant de l'amont vers l'aval et un obturateur mobile fermant l'extrémité aval du corps tronconique, caractérisé en ce que l'extrémité amont du corps tronconique est réunie de façon continue et étanche sur toute sa circonférence à la paroi interne du corps tubulaire de la pipe en un endroit situé en aval du bouchon et en amont de la seconde extrémité du conduit anti-refoulement et en ce que le corps tronconique comporte un premier passage interne calibré pour recevoir le bec d'un pistolet de pompe de remplissage et un second passage interne pour l'évacuation des vapeurs lors du remplissage du réservoir.

La pipe de remplissage selon la présente invention permet en outre de diminuer les possibilités d'éjection du carburant pendant le remplissage.

La suite de la description se réfère aux figures annexées qui représentent, respectivement :
figure 1, une vue en coupe longitudinale d'une pipe de remplissage et d'un clapet d'étanchéité de l'art antérieur ;
figure 2, une vue en coupe longitudinale d'une pipe de remplissage et d'un clapet d'étanchéité selon la présente invention ;
figure 3, une vue semblable à celle de la figure 2 avec le bec d'un pistolet de pompe introduit dans la pipe de remplissage ;
figure 4, une vue en coupe de l'extrémité du corps tronconique du clapet d'étanchéité de la pipe de remplissage faite suivant la ligne A de la figure 2;
figure 5, une vue en coupe longitudinale d'une pipe de remplissage et d'une autre réalisation du clapet d'étanchéité selon la présente invention; et
figure 6, une vue en coupe de l'extrémité du corps tronconique du clapet d'étanchéité faite selon la ligne B de la figure 5.

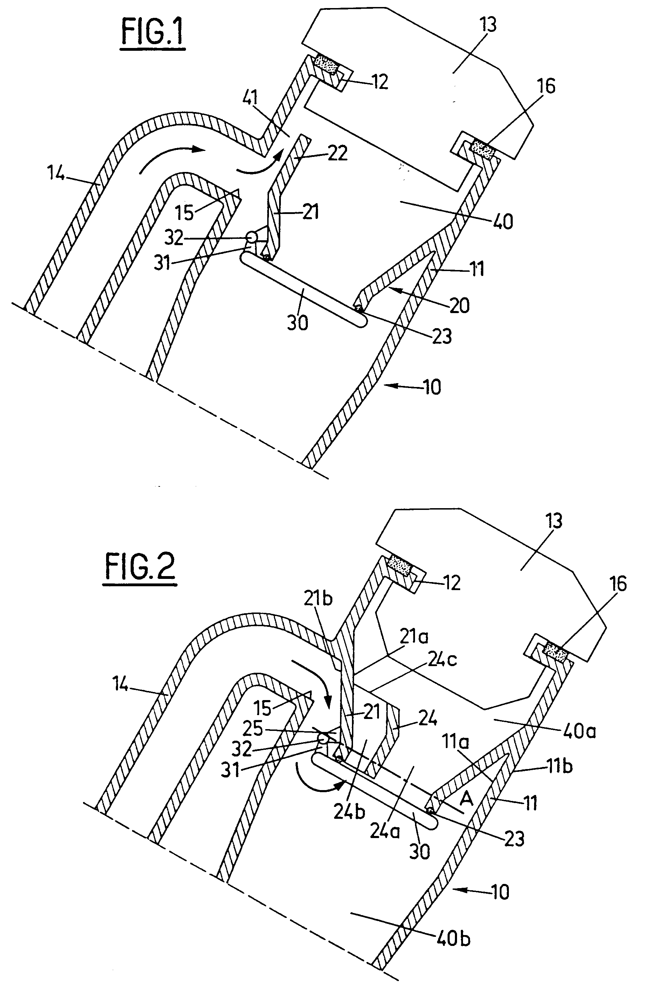

On a représenté à la figure 1 une pipe de remplissage 10 de réservoir de carburant munie d'un clapet d'étanchéité 20 de l'art antérieur. La pipe de remplissage 10 comporte un corps tubulaire 11 ayant une paroi interne 11a, une paroi externe 11b, une première extrémité ouverte communiquant avec un réservoir de carburant (non représenté) et une seconde extrémité ouverte 12 communiquant avec l'atmosphère et normalement fermée par un bouchon 13. La pipe de remplissage 10 comporte également un conduit anti-refoulement 14 relié par une première extrémité ouverte au réservoir de carburant et par une seconde extrémité ouverte 15 au corps tubulaire 11 de la pipe de remplissage 10 à proximité de la seconde extrémité ouverte 12 du corps 11 de la pipe 10. Un clapet 20 est situé à l'intérieur du corps tubulaire de la pipe. Le clapet 20 comporte un corps tronconique 21 dont la section décroît dans la direction aval et ayant une paroi interne 21a, une paroi externe 21b et des extrémités ouvertes. Le corps tronconique 21 du clapet 20 est solidaire du corps tubulaire 11 de la pipe sur une partie de sa périphérie amont afin d'assurer le support du corps tronconique 21 à l'intérieur du corps tubulaire 11. La partie amont du corps tronconique 21 du clapet a un diamètre inférieur au diamètre intérieur du corps tubulaire 11 de la pipe afin de définir un passage d'évacuation des vapeurs 41 entre la paroi externe 21b de la partie amont du corps tronconique 21 et la paroi interne correspondante 11b du corps tubulaire 11 de la pipe de remplissage 10. Le corps tronconique 21 du clapet 20 se termine en aval par une extrémité ouverte 23 dont le diamètre est calibré pour recevoir le bec du pistolet de la pompe de carburant. Un obturateur mobile 30, généralement sous la forme d'une plaque circulaire, ferme normalement l'extrémité ouverte aval 23 du corps tronconique 21 du clapet 20. L'obturateur mobile 30 est fixé à un axe de pivotement 32 au moyen d'un bras 31. L'axe de pivotement 32 est porté par un bossage 25 formé sur la paroi externe 21b de la partie aval du corps tronconique 21 du clapet 20. Un ressort de rappel disposé sur l'axe de pivotement 32 maintient normalement l'obturateur 30 en position de fermeture contre l'extrémité ouverte aval 23 du corps tronconique 21 du clapet 20.

Lors du remplissage du réservoir du carburant, le pompiste ou le client enlève le bouchon 13, introduit le bec du pistolet de la pompe qui pénètre dans la pipe de remplissage à l'intérieur du corps tronconique creux 21 du clapet et ouvre l'obturateur 30 en le faisant pivoter autour de l'axe 32 sous l'effet de la force appliquée par le bec du pistolet de la pompe à l'encontre de la force de rappel du ressort. Le pompiste ou le client peut alors remplir le réservoir. L'extrémité ouverte aval 23 du clapet a un diamètre calibré ne laissant passer que les becs du pistolet de pompe ayant un diamètre adapté. Le clapet interne de la pipe de remplissage sert de détrompeur entre les pistolets normaux et ceux pour l'essence sans plomb. Les vapeurs, sous pression lors du remplissage du réservoir, peuvent s'échapper par le passage 41 prévu entre la paroi externe de la partie amont du corps tronconique 21 et la paroi interne 11b du corps tubulaire 11 de la pipe de remplissage 10.

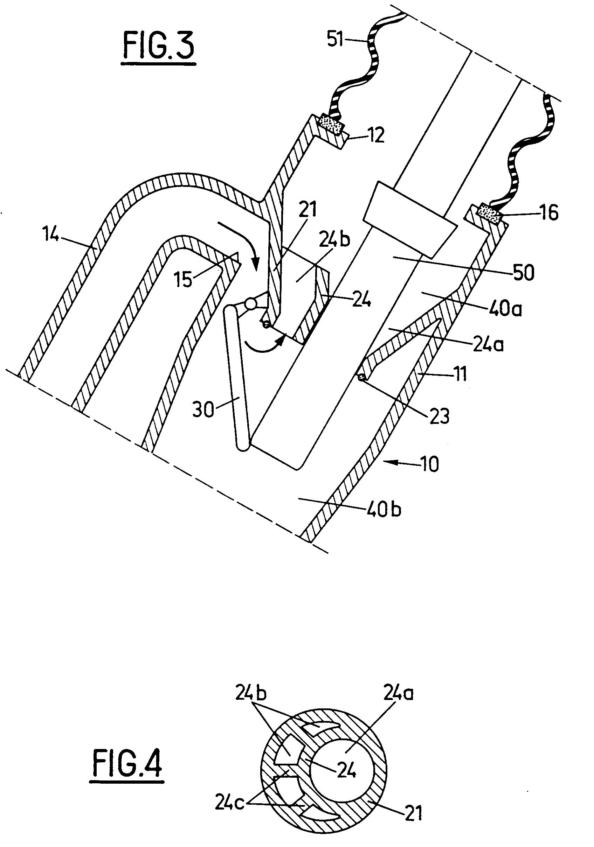

Avec une telle pipe de remplissage, en utilisant un pistolet de pompe de remplissage pourvue d'un système de récupération de vapeur comme représenté à la figure 3 il est possible de récupérer les vapeurs pendant la phase de remplissage du réservoir. Toutefois, pendant les phases pré- et post remplissage, c'est à dire avant l'introduction du pistolet et après le retrait du bouchon 13 et après le retrait du pistolet et avant la remise en place du bouchon 13, l'ensemble du volume du réservoir, du corps tubulaire 11 de la pipe de remplissage 10 et du conduit anti-refoulement 14 se trouve en communication avec l'atmosphère par l'intermédiaire du passage libre 41, et par suite les vapeurs de carburant qui s'y trouvent en surpression peuvent s'échapper librement dans l'atmosphère.

On a représenté sur les figures 2 à 6 une pipe de remplissage munie d'un clapet selon la présente invention qui permet, pendant les phases de pré- et post-remplissage, uniquement aux vapeurs se trouvant dans le volume situé en amont du clapet de se dégager dans l'atmosphère, et qui empêche le dégagement dans l'atmosphère, au cours de ces deux phases, des vapeurs contenues dans le réservoir, le volume du corps tubulaire 11 de la pipe de remplissage en aval du clapet et le conduit anti-refoulement 14.

En se référant aux figures 2 à 6 où les mêmes éléments portent les mêmes numéros de référence, et tout d'abord à la figure 2, une pipe de remplissage 10 d'un réservoir de carburant (non représenté), par exemple d'un véhicule automobile, selon la présente invention comprend un corps tubulaire 11 ayant une paroi interne 11a, une paroi externe 11b, une première extrémité ouverte (non représentée) communiquant avec le réservoir de carburant, et une seconde extrémité ouverte 12 communiquant avec l'atmosphère et normalement fermée de façon étanche par un bouchon amovible 13. Généralement, la seconde extrémité ouverte 12 est pourvue sur son bord annulaire extérieur d'un joint d'étanchéité 16, par exemple un joint torique en caoutchouc ou élastomère afin d'améliorer l'étanchéité entre cette seconde extrémité 12 et le bouchon 13. La pipe de remplissage 10 comporte également un conduit anti-refoulement 14 réuni par une première extrémité ouverte (non représentée) au réservoir et par une seconde extrémité ouverte 15 au corps tubulaire 11 de la pipe de remplissage 10, à une courte distance de la seconde extrémité ouverte 12 du corps tubulaire 11 de la pipe de remplissage. Le conduit anti-refoulement 14 a pour but d'éviter un refoulement du carburant hors de la pipe de remplissage 10 lors du remplissage du réservoir de carburant.

La pipe de remplissage 10 comporte également un clapet interne désigné d'une manière générale par la référence 20 sur les figures. Le clapet interne 20 comporte un corps tronconique creux (21) et un obturateur mobile 30. Le corps tronconique 21 comprend une paroi interne 21a, une paroi externe 21b, une extrémité ouverte amont 22 et une extrémité ouverte aval 23. La section du corps tronconique creux 21 diminue de l'amont vers l'aval. Un obturateur mobile 30 analogue à celui de l'art antérieur décrit en liaison avec la figure 1 ferme normalement l'extrémité aval 23 du corps tronconique 21 du clapet 20. De préférence, l'extrémité aval 23 du corps tronconique 21 est pourvue d'un joint d'étanchéité, par exemple un joint torique en caoutchouc ou en élastomère, afin d'améliorer l'étanchéité entre l'extrémité aval 23 du corps tronconique 21 et l'obturateur 30. L'extrémité amont 22 du corps tronconique creux 21 est réunie de façon continue et étanche sur toute sa circonférence à la paroi interne 11a du corps tubulaire 11 de la pipe de remplissage 10 en un endroit situé en aval du bouchon 13 et en amont de la seconde extrémité 15 du conduit anti-refoulement 14. Ainsi, le corps tronconique creux 21 et l'obturateur mobile 30, fermant normalement l'extrémité aval ouverte 23 du corps tronconique creux 21, séparent l'intérieur de la pipe de remplissage en deux volumes isolés l'un de l'autre de manière étanche, un volume amont 40a de dimension réduite comprenant l'intérieur du corps tronconique 21 et la partie du corps tubulaire 11 de la pipe de remplissage comprise entre le bouchon et l'intérieur du corps tronconique creux 21, et un volume aval 40b comprenant l'intérieur du corps tubulaire 11 de la pipe, en aval de la paroi externe du corps tronconique 21 et de l'obturateur mobile 30, l'intérieur du conduit anti-refoulement 14 et le réservoir de carburant. Le corps tronconique 21 comporte également deux passages internes. Un premier passage 24a est calibré pour! recevoir le bec du pistolet de remplissage. Un second passage 24b permet l'évacuation des vapeurs sous pression lors du remplissage du réservoir.

Dans un mode de réalisation, les passages internes 24a et 24b sont réalisés au moyen d'une cloison interne 24. Comme on le voit mieux à la figure 4, qui est une vue en coupe de l'extrémité aval du corps tronconique creux 21 faite suivant la ligne A de la figure 2, la cloison interne 24 se compose d'une cloison semi-circulaire comportant une paroi interne et une paroi externe et dont une partie est réunie à la paroi interne 21a du corps tronconique 21. La paroi interne de la cloison semi-circulaire 24 et une partie de la paroi interne 21a du corps tronconique 21 définissent le premier passage calibré 24a, et la paroi externe de la cloison 24 et la partie restante de la paroi interne du corps tronconique 21 définissent le second passage 24b.

Afin d'accroître la résistance mécanique du corps tronconique 21, et en particulier de la cloison semi-circulaire 24 on peut prévoir des nervures radiales 24c réunissant la paroi externe de la cloison semi-circulaire 24 et la paroi interne du corps tronconique creux 21 définissant partiellement le second passage 24b. Le second passage 24b comprend alors une série de canaux longitudinaux. Bien que sur la figure 4 on ait représenté trois nervures définissant quatre canaux longitudinaux, il est bien évident que l'on peut prévoir un nombre inférieur ou supérieur de nervures et par conséquent de canaux.

Il est également souhaitable que la partie amont de la cloison semi-circulaire 24 soit légèrement inclinée radialement vers l'extérieur en direction amont afin de permettre un meilleur guidage du bec de pistolet de remplissage et son introduction aisée dans le premier passage calibré 24a.

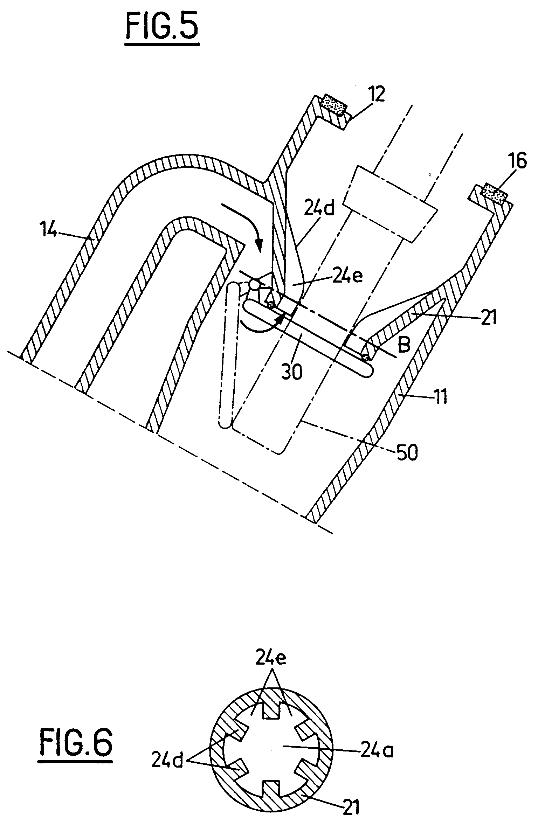

Dans un autre mode de réalisation de l'invention représenté aux figures 5 et 6, la paroi interne 21a de la partie aval du corps tronconique 21 est pourvue d'une série de nervures longitudinales 24d espacées circulairement suivant la circonférence de cette paroi interne 21a du corps tronconique 21, formant entres-elles des canaux 24e. Les nervures longitudinales 24d saillent radialement vers l'intérieur d'une hauteur déterminée pour permettre le passage du bec de pistolet de la pompe. Ainsi, les extrémités radialement intérieures des nervures 24d définissent le premier passage calibré 24a pour le passage du bec de pistolet, et les canaux 24e entre les nervures 24d définissent le second passage 24b d'évacuation des vapeurs lors du remplissage du réservoir.

Bien que l'on ait représenté six nervures longitudinales 24d et par conséquent six canaux 24e sur la figure 6, il est bien évident que l'on peut utiliser un nombre inférieur ou supérieur de nervures et par conséquent de canaux.

Il est également avantageux de prévoir une diminution progressive de la hauteur des nervures longitudinales 24d en direction amont afin de permettre un guidage et une introduction plus aisée du bec du pistolet de la pompe dans le premier passage calibré 24a.

Bien que l'on est représenté le corps tronconique creux 21 du clapet sous la forme d'un tronc de cône droit ayant une extrémité aval cylindrique, il est possible d'utiliser d'autres formes pour autant que le corps du clapet conjointement d'avec l'obturateur 30 en position de fermeture divise le corps tubulaire en deux volumes isolés de manière étanche comme indiqué précédemment et pour autant que le corps du clapet comporte un premier passage calibré pour le passage du bec du pistolet de remplissage et un second passage pour l'évacuation des vapeurs lors du remplissage. Par exemple le corps 21 du clapet peut avoir la forme d'un tronc de cône ayant une surface latérale présentant une courbure telle que sa section diminue de l'amont vers l'aval et que son extrémité ouverte aval 23 assure une étanchéité appropriée avec l'obturateur 30 du clapet.

Le corps tubulaire 11 de la pipe de remplissage, ainsi que le clapet 20 peuvent être réalisés en tous matériaux appropriés tels que des métaux, alliages et matières plastiques convenables. Le corps tronconique 21 peut être réuni de façon étanche au corps tubulaire 11 de la pipe de remplissage par tous moyens appropriés tels que soudage, collage, ou l'ensemble du corps tubulaire 11 et du corps tronconique 21 peut être réalisé d'une seule pièce, par exemple par moulage.

En se référant plus particulièrement aux figures 2 et 3, on va maintenant décrire le fonctionnement de la pipe de remplissage 10 et du clapet 20 de la présente invention. Comme il apparaît clairement au vu de la figure 2 et comme mentionné précédemment, puisque le clapet 20 en position de fermeture sépare de façon étanche la pipe de remplissage 10 en deux volumes distincts, un volume amont restreint 40a et un volume aval plus important 40b, lorsque le pompiste ou le client enlève le bouchon 13, et avant l'introduction du pistolet de la pompe, seul le volume restreint amont 40a est mis en communication avec l'atmosphère, et par conséquent seul un faible volume de vapeur est relâché dans l'atmosphère. Comme à ce moment le clapet 20 isole entièrement le volume aval 40b de l'atmosphère, toutes les vapeurs contenues dans ce volume aval 40b y restent confinées et ne peuvent s'échapper dans l'atmosphère.

Comme le montre la figure 3, lorsque le pompiste ou le client introduit le bec 50 du pistolet de la pompe de remplissage, celui-ci est guidé et vient se placer dans le premier passage calibré 24a du corps tronconique 21 du clapet 20, repousse l'obturateur 30 contre la force de rappel du ressort, mettant en communication le second passage d'évacuation 24b avec le volume aval 40b. Le pistolet de la pompe est pourvu d'un système de récupération des vapeurs qui se présente sous la forme d'une conduite souple 51 entourant concentriquement le pistolet et qui vient s'appliquer contre la seconde extrémité ouverte 12 du corps tubulaire 11 de la pipe de remplissage 10, et dont l'autre extrémité est reliée à un système de récupération des vapeurs. Ainsi, les vapeurs sous pression, peuvent s'évacuer par l'intermédiaire du second passage 24b maintenant ouvert, sans être relâchées dans l'atmosphère et le remplissage du réservoir avec du carburant frais peut s'effectuer.

A la fin du remplissage, une fois le bec 50 du pistolet retiré du premier passage calibré 24a et avant que le bouchon 13 ne soit remis en place, l'obturateur mobile 30 vient automatiquement sous l'action de la force de rappel du ressort fermer l'extrémité aval 23 du corps tronconique 21 du clapet 20 isolant à nouveau le volume aval 40b de l'atmosphère. Seules les vapeurs restant dans le volume amont restreint 40a s'échappent dans l'atmosphère avant la remise en place du bouchon 13.

L'invention réalise donc une pipe de remplissage 10 de réservoir de carburant, par exemple d'un véhicule automobile, qui ne permet le relâchement dans l'atmosphère que d'un volume excessivement restreint de vapeur.

## Revendications

1. Pipe de remplissage (10) de réservoir de carburant comprenant un corps tubulaire (11) ayant une paroi interne (11a), une paroi externe (11b), une première extrémité ouverte communiquant avec le réservoir de carburant et une seconde extrémité ouverte (12) communiquant avec l'atmosphère et fermée de façon étanche par un bouchon (13) amovible, un conduit anti-refoulement (14) relié par une première extrémité ouverte au réservoir de carburant et par une seconde extrémité ouverte (15) au corps tubulaire de la pipe de remplissage à proximité de la seconde extrémité ouverte (12) du corps tubulaire (11) de la pipe et un clapet étanche (20) situé à l'intérieur du corps tubulaire (11) de la pipe de remplissage en aval du bouchon (13), le clapet (20) comportant un corps tronconique creux (21) ayant une paroi interne (21a), une paroi externe (21b), une extrémité ouverte amont (22) et une extrémité ouverte amont aval (23), la section du corps tronconique diminuant de l'amont vers l'aval, et un obturateur mobile (30) fermant l'extrémité aval (23) du corps tronconique (21), caractérisé en ce que l'extrémité amont (22) du corps tronconique (21) est réuni de façon continue et étanche sur toute sa circonférence à la paroi interne (11a) du corps tubulaire (11) de la pipe de remplissage en un endroit situé en aval du bouchon (13) et en amont de la seconde extrémité (15) du conduit anti-refoulement (14) et en ce que le corps tronconique (11) comporte un premier passage interne calibré (24a) pour recevoir le bec du pistolet de la pompe et un second passage interne (24b) pour l'évacuation des vapeurs lors du remplissage du réservoir.

2. Pipe de remplissage selon la revendication 1, caractérisée en ce que le corps tronconique (21) du clapet (20) comporte une cloison interne semi-circulaire (24) ayant une paroi interne et une paroi externe la paroi interne de la cloison semi-circulaire 24 et une partie de la paroi interne (21a) du corps tronconique 21 définissant le premier passage (24a) et la paroi externe de la cloison semi-circulaire (24) et la partie restante de la paroi interne (21a) du corps tronconique (21) définissant le second passage (24b).

3. Pipe de remplissage selon la revendication 2, caractérisée en ce que une ou plusieurs nervures longitudinales (24c) réunissent la paroi externe de la cloison semi-circulaire (24) à la paroi interne (21a) du corps tronconique (21).

4. Pipe de remplissage selon la revendication 2 ou 3 caractérisée en ce que le cloison interne semi-circulaire (24) comporte une partie amont inclinée radialement vers l'extérieur suivant la direction amont.

5. Pipe de remplissage selon la revendication 1, caractérisée en ce que la paroi interne (210) du corps tronconique (21) comporte des nervures longitudinales (24d) espacées circulairement suivant la circonférence de la paroi interne (21a) du corps tronconique (21) pour former entre elles des canaux (24e), ces nervures saillant radialement vers l'intérieur d'une hauteur déterminée pour permettre le passage d'un bec de pistolet de pompe, les extrémités radialement intérieures des nervures (24d) définissant le premier passage (24a) et les canaux (24e) entre les nervures (24d) définissant le second passage (24b).

6. Pipe de remplissage selon la revendication 4, caractérisée en ce que la hauteur des nervures (24d) diminue progressivement suivant la direction amont.

## Claims

1. A fuel tank filling pipe (10) comprising a tubular body (11) having an inner wall (11a), an outer wall (11b), a first open end communicating with the fuel tank and a second open end (12) communicating with atmosphere and closed in a leak-tight manner by a detachable cap (13), a non-return duct (14) connected via a first open end to the fuel tank and via a second open end (15) to the tubular body of the filling pipe in the vicinity of the second open end (12) of the tubular body (11) of the pipe and a sealing valve (20) disposed within the tubular body (11) of the filling pipe downstream of the cap (13), the valve (20) comprising a hollow frustoconical body (21) having an inner wall (21a), an outer wall (21b), an upstream open end (22) and a downstream open end (23), the cross-section of the frustoconical body decreasing in the downstream direction, and a moving shutter (30) closing the downstream end (23) of the frustoconical body (21), characterised in that the upstream end (22) of the frustoconical body (21) is connected in a continuous and leak-tight manner over its entire periphery to the inner wall (11a) of the tubular body (11) of the filling pipe at a location disposed downstream of the cap (13) and upstream of the second end (15) of the non-return duct (14) and in that the frustoconical body (11) comprises a first inner calibrated passage (24a) to receive the nozzle of a filling pump gun and a second inner passage (24b) for the removal of vapours when the tank is being filled.

2. A filling pipe as claimed in claim 1, characterised in that the frustoconical body (21) of the valve (20) comprises an inner, semi-circular partition (24) comprising an inner wall and an outer wall, the inner wall of the semi-circular partition (24) and a portion of the inner wall (21a) of the frustoconical body (21) defining the first passage (24a) and the outer wall of the semi-circular partition (24) and the remaining portion of the inner wall (21a) of the frustoconical body (21) defining the second passage (24b).

3. A filling pipe as claimed in claim 2, characterised in that one or a plurality of longitudinal ribs (24c) connect the outer wall of the semi-circular partition (24) to the inner wall (21a) of the frustoconical body (21).

4. A filling pipe as claimed in claim 2 or 3, characterised in that the semi-circular partition (24) comprises an upstream portion inclined radially outwards in the upstream direction.

5. A filling pipe as claimed in claim 1, characterised in that the inner wall (21a) of the frustoconical body (21) comprises longitudinal ribs (24d) spaced circularly about the periphery of the inner wall (21a) of the frustoconical body (21) so as to form channels (24e) between one another, these ribs projecting radially inwards by a height adapted to allow the passage of the nozzle of a pump gun, the radially inner ends of the ribs (24d) defining the first passage (24a) and the channels (24e) between the ribs (24d) defining the second passage (24b).

6. A filling pipe as claimed in claim 4, characterised in that the height of the ribs (24d) decreases progressively in the upstream direction.

## Patentansprüche

1. Einfüllstutzen (10) für einen Kraftstofftank, mit einem rohrförmigen Körper (11), der eine Innenwand (11a) aufweist, eine Außenwand (11b), ein erstes offenes Ende, das mit dem Kraftstofftank in Verbindung steht und ein zweites offenes Ende (12), das mit der Umgebung in Verbindung steht und der in dichter Weise durch einen abnehmbaren Deckel (13) verschlossen ist, wobei eine Entlüftungsleitung (14) mit einem ersten offenen Ende mit dem Kraftstofftank verbunden ist und mit einem zweiten offenen Ende (15) mit dem rohrförmigen Körper des Einfüllstutzens in der Nähe des zweiten offenen Endes (12) des rohrförmigen Körpers (11) des Stutzens verbunden ist und ein Abdichtventil (20) im Inneren des rohrförmigen Körpers (11) des Einfüllstutzens hinter dem Deckel (13) angeordnet ist; das Ventil (20) enthält einen hohlen kegelstumpfförmigen Körper (21) mit einer Innenwand (21a), mit einer Außenwand (21b), mit einem stromaufwärts angeordneten offenen Ende (22) und mit einem stromabwärts angeordneten offenen Ende (23), wobei sich der Querschnitt des kegelstumpfförmigen Körpers, in Strömungsrichtung gesehen, verringert und ein bewegliches Verschlußteil (30) das stromabwärts gelegene Ende (23) des kegelstumpfförmigen Körpers (21) verschließt; der Stutzen ist dadurch gekennzeichnet, daß das stromaufwärts gelegene Ende (22) des kegelstumpfförmigen Körpers (21) in durchgehender und dichter Weise entlang seines gesamten Umfangs mit der Innenwand (11a) des rohrförmigen Körpers (11) des Einfüllstutzens an einer Stelle verbunden ist, die stromabwärts des Deckels (13) und stromaufwärts des zweiten Endes (15) der Entlüfungsleitung (14) liegt und daß der kegelstumpfförmige Körper (11) einen ersten geeichten inneren Durchlaß (24a) für den Füllzapfen der Zapfpistole aufweist sowie einen zweiten inneren Durchlaß 24b zur Abfuhr der Dämpfe während der Auffüllung des Tanks.

2. Einfüllstutzen nach Anspruch 1, dadurch gekennzeichnet, daß der kegelstumpfförmige Körper (21) des Ventils (20) eine innere halbkreisförmige Trennwand (24a) aufweist mit einer Innenwand und mit einer Außenwand, wobei die Innenwand der halbkreisförmigen Trennwand (24) und ein Abschnitt der Innenwand (21a) des kegelstumpfförmigen Körpers (21) den ersten Durchlaß (24a) bilden und die Außenwand der halbkreisförmigen Trennwand (24) und der verbleibende Abschnitt der Innenwand (21a) des kegelstumpfförmigen Körpers (21) den zweiten Durchlaß (24b) bilden.

3. Einfüllstutzen nach Anspruch 2, dadurch gekennzeichnet, daß eine oder mehrere Längsrippen (24c) die Außenwand der halbkreisförmigen Trennwand (24) mit der Innenwans (21a) des kegelstumpfförmigen Körpers (21) verbinden.

4. Einfüllstutzen nach Anspruch 2 oder 3, dadurch gekennzeichnet, daß die halbkreisförmige innere Trennwand (24) einen stromaufwärtigen Abschnitt aufweist, der radial nach außen und stromaufwärts hin geneigt ist.

5. Einfüllstutzen nach Anspruch 1, dadurch gekennzeichnet, daß die Innenwand (21a) des kegelstumpfförmigen Körpers (21) Längsrippen (24d) aufweist, die kreisförmig und im Abstand voneinander entlang des Umfangs der Innenwand (21a) des kegelstumpfförmigen Körpers (21) angeordnet sind, um zwischen sich Kanäle (24e) zu bilden, wobei die radial nach innen vorspringenden Rippen eine vorgegebene Höhe aufweisen, die den Durchlaß einer Zapfpistole ermöglichen, wobei die inneren radialen Enden der Rippen (24d) den ersten Durchlaß (24a) bilden und die Kanäle (24e) zwischen den Rippen (24d) den zweiten Durchlaß (24b) bilden.

6. Einfüllstutzen nach Anspruch 4, dadurch gekennzeichnet, daß die Höhe der Rippen (24d) stromaufwärts gesehen abnimmt.
